# EUROPÄISCHE PATENTANMELDUNG

(11) **EP 4 793 484 A1**
(43) Veröffentlichungstag der Anmeldung: **19.08.2026**
(21) Anmeldenummer: 26157694.6
(22) Anmeldetag: 10.02.2026
(51) Int. Cl.: F02D 41/14, F02D 41/26, F02D 41/24, G06F 17/17

(54) **VERFAHREN ZUM BETREIBEN EINER BRENNKRAFTMASCHINE, COMPUTERPROGRAMM, STEUERVORRICHTUNG FÜR EINE BRENNKRAFTMASCHINE, BRENNKRAFTMASCHINE UND VERFAHREN ZUM AUSLEGEN EINER BRENNKRAFTMASCHINE**

(30) Priorität: 17.02.2025 DE 102025105926
(71) Anmelder: Rolls-Royce Solutions GmbH, 88045 Friedrichshafen (DE)
(72) Erfinder: Bergmann, Daniel, 88410 Bad Wurzach (DE)
(74) Vertreter: Gleiss Große Schrell und Partner mbB

(57) **Zusammenfassung**

Die Erfindung betrifft ein Verfahren zum Betreiben einer Brennkraftmaschine, wobei
- einem Brennkraftmaschinenmodell mindestens eine Eingangsgröße zugeführt wird, wobei
- als das Brennkraftmaschinenmodell ein Gauß-Prozess verwendet wird, wobei
- als ein Ausgangsgrößenvektor ein Vektor verwendet wird, der Element eines Vektorraums mit D > 1 Dimensionen ist, wobei
- eine Kovarianzfunktion verwendet wird, die als Produkt einer komponentenweise berechneten Basis-Kovarianzfunktion über Komponenten des Ausgangsgrößenvektors dargestellt werden kann, wobei
- die Basis-Kovarianzfunktion nicht in ein Produkt aus Funktionen jeweils genau einer Dimension des Vektorraums über die Dimensionen des Vektorraums aufspaltbar ist, wobei
- anhand des Brennkraftmaschinenmodells der Ausgangsgrößenvektor berechnet wird, und wobei
- die Brennkraftmaschine mit dem Ausgangsgrößenvektor betrieben wird.

## Beschreibung

Die Erfindung betrifft ein Verfahren zum Betreiben einer Brennkraftmaschine, ein Computerprogramm sowie eine Steuervorrichtung für eine Brennkraftmaschine zur Durchführung eines solchen Verfahrens, eine Brennkraftmaschine und ein Verfahren zum Auslegen einer Brennkraftmaschine.

Beim Betreiben einer Brennkraftmaschine auf der Grundlage eines anhand von Prüfstands- oder Trainingsdaten erstellten Brennkraftmaschinenmodells ergibt sich regelmäßig das Problem einer korrekten Extrapolation sowie Interpolation. Insbesondere wenn ein Gauß-Prozess als das Brennkraftmaschinenmodell verwendet wird, können durch das Brennkraftmaschinenmodell prädizierte Werte außerhalb der Trainingsdaten oder auch zwischen Datenpunkten der Trainingsdaten grob falsch sein, wenn Monotonieeigenschaften des Verhaltens der mit dem Brennkraftmaschinenmodell betriebenen Brennkraftmaschine durch das Brennkraftmaschinenmodell nicht korrekt berücksichtigt werden. Eine solche grundlegende Monotonieeigenschaft ist beispielsweise, dass eine Vergrößerung einer in einen Brennraum der Brennkraftmaschine eingebrachten Brennstoffmenge nur zu einer Vergrößerung des Drehmoments der Brennkraftmaschine führen kann, nicht jedoch zu dessen Verringerung. Hängen jedoch beispielsweise dem Brennkraftmaschinenmodell zugrundeliegende Funktionen zwischen einzelnen Datenpunkten der Trainingsdaten gleichsam durch - was bedeutet, dass die Funktionen zwischen irgendzwei unmittelbar benachbarten Datenpunkten Werte annehmen, die kleiner sind als jeder der beiden Datenpunkte -, kann ein das tatsächliche Verhalten der Brennkraftmaschine durch das Modell lokal falsch abgebildet werden. Dies gilt ganz besonders auch für Randbereiche eines durch das Modell aufgespannten Zustandsraums. Um derartige Monotonieeigenschaften beim Erstellen eines Brennkraftmaschinenmodells und im Betrieb der Brennkraftmaschine korrekt wiederzugeben, bedarf es der Erstellung eines über dem gesamten Zustandsraums aufgespannten feinen Gitters von Nebenbedingungen an Gradienten der Funktionen des Brennkraftmaschinenmodells, wobei das feine Gitter engmaschig in dem Sinn ist, dass es in allen Dimensionen des Zustandsraums mehr Gitterpunkte aufweist, als das Brennkraftmaschinenmodell selbst in der jeweiligen Dimension Stützstellen hat. Dies bringt einen erheblichen Rechenaufwand mit sich, der insbesondere mittels Standard-PCs nicht zu bewältigen ist.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird in einem ersten Aspekt insbesondere gelöst, indem ein - auch als erstes Betriebsverfahren bezeichnetes - Verfahren zum Betreiben einer Brennkraftmaschine geschaffen wird, wobei
- einem Brennkraftmaschinenmodell mindestens eine Eingangsgröße zugeführt wird, wobei
- als das Brennkraftmaschinenmodell ein Gauß-Prozess verwendet wird, wobei
- als ein Ausgangsgrößenvektor ein Vektor verwendet wird, der Element eines Vektorraums mit *D* > 1 Dimensionen ist, wobei
- eine Kovarianzfunktion verwendet wird, die als Produkt einer komponentenweise berechneten Basis-Kovarianzfunktion über Komponenten des Ausgangsgrößenvektors dargestellt werden kann, wobei
- die Basis-Kovarianzfunktion nicht in ein Produkt aus Funktionen jeweils genau einer Dimension des Vektorraums über die Dimensionen des Vektorraums aufspaltbar ist, wobei
- anhand des Brennkraftmaschinenmodells der Ausgangsgrößenvektor berechnet wird, und wobei
- die Brennkraftmaschine mit dem Ausgangsgrößenvektor betrieben wird.

Vorteilhaft erlaubt die Bedingung, dass die Basis-Kovarianzfunktion nicht in ein Produkt aus Funktionen jeweils genau einer Dimension des Vektorraums über die Dimensionen des Vektorraums aufspaltbar ist, die Auswahl einer Basis-Kovarianzfunktion, die leicht und schnell, das heißt insbesondere mit geringer Rechenleistung, berechnet werden kann. Indem außerdem die Kovarianzfunktion als Produkt der komponentenweise berechneten Basis-Kovarianzfunktion über die Komponenten des Ausgangsgrößenvektors dargestellt werden kann, bedarf es für die korrekte Abbildung der Monotonieeigenschaften lediglich eines gröberen Gitters von Nebenbedingungen an die Gradienten der Funktionen des Brennkraftmaschinenmodells mit einer deutlich reduzierten Anzahl an Gitterpunkten, die insbesondere nur entlang gedachter Verbindungslinien in den einzelnen Dimensionen an den Stützstellen des Brennkraftmaschinenmodells und optional zwischen den Stützstellen angeordnet werden müssen, nicht jedoch zusätzlich auch noch zwischen diesen gedachten Verbindungslinien. Dies liegt insbesondere daran, dass aufgrund der speziellen Wahl der Kovarianzfunktion eine Projektion auf jede einzelne Dimension möglich wird. Somit wird der Daten- und Rechenaufwand für die korrekte Wiedergabe der Monotonieeigenschaften drastisch reduziert, und das Brennkraftmaschinenmodell kann insbesondere mit der Rechenleistung eines zu dem den Zeitrang des vorliegenden Schutzrechts bestimmenden Zeitpunkt erhältlichen, herkömmlichen Standard-PCs berechnet und/oder erstellt werden.

Im Kontext der vorliegenden technischen Lehre wird unter einem Verfahren zum Betreiben der Brennkraftmaschine insbesondere ein Verfahren zum Steuern oder Regeln der Brennkraftmaschine verstanden.

Die Variable $D ∈ ℕ$ gibt die Anzahl der Dimensionen des Vektorraums an. Der Vektorraum ist insbesondere ein Zustandsraum der Brennkraftmaschine.

In einer Ausgestaltung wird eine Kovarianzfunktion verwendet, die als Produkt einer komponentenweise berechneten Basis-Kovarianzfunktion über alle Komponenten des Ausgangsgrößenvektors dargestellt werden kann.

In einer Ausgestaltung wird eine Basis-Kovarianzfunktion verwendet, die nicht in ein Produkt aus Funktionen jeweils genau einer Dimension des Vektorraums über alle Dimensionen des Vektorraums aufspaltbar ist. Dies bedeutet insbesondere, dass die Basis-Kovarianzfunktion keine Gauß-Funktion ist.

Somit ist auch die Kovarianzfunktion kein Produkt aus Gauß-Funktionen und auch selbst keine Gauß-Funktion. Zwar würde eine Gauß-Funktion stets die Bedingung erfüllen, als Produkt einer komponentenweise berechneten Basis-Kovarianzfunktion über die Komponenten des Ausgangsgrößenvektors darstellbar zu sein, jedoch wäre die erforderliche Rechenleistung für das Verfahren sehr hoch. Indem das vorliegende Verfahren auf eine Basis-Kovarianzfunktion zurückgreift, die selbst nicht in ein Produkt aus Funktionen jeweils genau einer Dimension des Vektorraums über die Dimensionen des Vektorraums aufspaltbar und insbesondere keine Gauß-Funktion ist, kann das Verfahren mit deutlich geringerer Rechenleistung und damit effizienter und kostengünstiger durchgeführt werden.

Dass die Brennkraftmaschine mit dem Ausgangsgrößenvektor betrieben wird, bedeutet insbesondere, dass die Brennkraftmaschine mit dem Ausgangsgrößenvektor angesteuert wird.

Gemäß einer Weiterbildung der Erfindung ist vorgesehen, dass als die Basis-Kovarianzfunktion eine abgeschnittene Potenzfunktion (engl. *truncated power function*) verwendet wird. Vorteilhaft können die Rechnungen auf der Grundlage einer solchen Basis-Kovarianzfunktion besonders effizient durchgeführt werden.

Gemäß einer Weiterbildung der Erfindung ist vorgesehen, dass die abgeschnittene Potenzfunktion von einem - insbesondere euklidischen - Abstand der jeweiligen Komponente des Ausgangsgrößenvektors von einer zugeordneten Komponente eines vorbestimmten Vektorraum-Gittervektors abhängen.

Gemäß einer Weiterbildung der Erfindung ist vorgesehen, dass als die Basis-Kovarianzfunktion die Funktion $k ′ \left({x}_{i}, {X}_{j , i}\right) = max \left(0, {\left(1-\frac{{\left‖{x}_{i}-{X}_{j , i}\right‖}_{2}^{2}}{2 {l}_{N}^{2} p}\right)}^{p}\right)$ mit dem Ausgangsgrößenvektor ***x,*** dem Vektorraum-Gittervektor ***X**ⱼ,* einer Längenskalenparamter *l_{N}* und einem Parameter *p,* insbesondere einem Exponenten *p,* verwendet wird. Fett gesetzte Kleinbuchstaben ohne Indizes bezeichnen im folgenden Vektoren, fett gesetzte Großbuchstaben ohne Indizes bezeichnen Matrizen; somit ist ***X*** eine Matrix, **x** und ***X**ⱼ* sind Vektoren, *xᵢ* und *X_{j,i}* sind Skalare, und insbesondere ist *xᵢ* die Kompenente des Vektors ***x*** in der Dimension *i,* während *X_{j,i}* die Matrixkomponente der Matrix ***X*** in den Dimensionen *j* und *i* ist.

In einer Ausführungsform ist *p* = 8.

Die Komponente *kⱼ*(***x,X**ⱼ*) der vektorwertigen Kovarianzfunktion ***k*(*****x**,****X*)** ist dann gegeben durch: ${k}_{i} \left(x, {X}_{j}\right) = {\prod }_{i = 1}^{D} k ′ \left({x}_{i}, {X}_{j , i}\right) = {\prod }_{i = 1}^{D} max \left(0, {\left(1-\frac{{\left‖{x}_{i}-{X}_{j , i}\right‖}_{2}^{2}}{2 {l}_{N}^{2} p}\right)}^{p}\right) ,$ d.h. als Produkt der Basis-Kovarianzfunktion *k'*(*xᵢ,X_{j,i}*) über alle Dimensionen.

Gemäß einer Weiterbildung der Erfindung ist vorgesehen, dass das Verfahren während des Betriebs der Brennkraftmaschine fortlaufend durchgeführt wird. Auf diese Weise wird gewährleistet, dass sich die mit dem Verfahren ergebenden Vorteile während des gesamten Betriebs der Brennkraftmaschine einstellen.

In einer Ausführungsform ist vorgesehen, dass das Brennkraftmaschinenmodell ein Gauß-Prozessmodell umfasst. Bevorzugt umfasst der Gauß-Prozess für jede Eingangsgröße ein Gauß-Prozessmodell.

Gauß-Prozessmodelle eignen sich in besonderer Weise zur Steuerung oder Regelung einer Brennkraftmaschine: Im Vergleich zu Polynom-basierten Modellen sind sie insbesondere einfacher im Anwendungsfeld an neue oder geänderte Datenpunkte adaptierbar, und sie weisen ein geeigneteres und auch physikalisch korrekteres Verhalten in Randbereichen des gegebenen Zustandsraums auf. Im Vergleich zu physikalischen Modellen benötigen Sie einen deutlich geringeren Berechnungsaufwand. Außerdem ermöglichen sie die direkte Verwendung von Prüfstandsdaten.

Ein solches Gauß-Prozessmodell ist insbesondere gegeben durch ein in dem *D*-dimensionalen Vektorraum ${ℝ}^{D}$ gegebenes, regelmäßiges Stützstellengitter ***X**_{N}* wobei das Gitter $n ∈ ℕ$ gleichmäßig - d.h. in gleichen Abständen zueinander - angeordnete Stützstellen pro Dimension aufweist, sodass ${X}_{N} ∈ {ℝ}^{{n}^{D} \times D}$ eine Stützstellen-Matrix von *n^{D}* Ausgangsgrößen-Vektoren ***X**_{Nj}* mit jeweils *D* Komponenten ist. Dabei entspricht jede Komponente - oder anders ausgedrückt jede Dimension - einer Ausgangsgröße, und die *n^{D}* Ausgangsgrößen-Vektoren können verschiedenen Betriebszuständen der Brennkraftmaschine zugeordnet werden. Die Stützstellen werden in dem Vektorraum vorzugsweise so angeordnet, dass dieser vollständig durch die Stützstellen abgedeckt wird, das heißt dass insbesondere auch in Randbereichen des Vektorraums Stützstellen angeordnet sind.

Den Stützstellen sind jeweils Stützstellen-Eingangsgrößen *y_{N}* zugeordnet, die als freie Parameter des Gauß-Prozessmodells dienen. Der Stützstellen-Matrix ***X**_{N}* ist somit ein Stützstellen-Eingangsvektor ***y**_{N}* zugeordnet, wobei nämlich jedem Ausgangsgrößen-Vektor ***X**_{Nj}* eine skalare Stützstellen- Eingangsgröße *y_{Nj}* zugeordnet ist.

Das Gauß-Prozessmodell soll nun prinzipiell eine Berechnung beliebiger Eingangsgrößen y(x) in Abhängigkeit beliebiger Ausgangsgrößenvektoren $x ϵ {ℝ}^{D}$ in dem Vektorraum - beziehungsweise beim Betreiben der Brennkraftmaschine umgekehrt, wie unten näher erläutert - ermöglichen, d.h. eine Funktion *f*: ${ℝ}^{D} ↦ ℝ$ bereitstellen, bevorzugt nach der Gleichung $y \left(x\right) = k \left(x, {X}_{N}\right) {K}^{- 1} {y}_{N}$ mit der der vektorwertigen Kovarianzfunktion $k \left(x, {X}_{N}\right) ∈ {ℝ}^{{n}^{D}}$ gemäß Gleichung (2), der Kovarianzmatrix $K = k \left({X}_{N}, {X}_{N}\right) ∈ {ℝ}^{{n}^{D} \times {n}^{D}}$, und dem Stützstellen-Eingangsvektor ${y}_{N} ∈ {ℝ}^{{n}^{D}}$.

Das Gauß-Prozessmodell wird letztlich erhalten, indem es mit einem beispielsweise in Prüfstandsversuchen erhaltenen Mess-Datensatz (***X**_{b},**y**_{b}*) optimiert wird, wobei mit ${X}_{b} ∈ {ℝ}^{o x D} D$ Ausgangsgrößen für *o* verschiedene Betriebszustände und mit ${y}_{b} ∈ {ℝ}^{o}$ ein Vektor mit jeweils einer Eingangsgröße für jeden der *o* Betriebszustände bezeichnet sind. Insbesondere bilden die Ausgangsgrößen ***X**_{b}* eine Menge von Ansteuerwerten für die Brennkraftmaschine. Die Eingangsgrößen ***y**_{b}* sind eine Menge von abhängig von den Ansteuerwerten resultierenden Größen der Brennkraftmaschine.

Das Gauß-Prozessmodell ist insoweit erstellt, insbesondere trainiert oder optimiert, um in Abhängigkeit der Ausgangsgrößen die Eingangsgrößen zu berechnen - insoweit stellen aus Sicht des Modells selbst die Ausgangsgrößen Eingänge des Modells dar, und umgekehrt stellen die Eingangsgrößen Ausgänge des Modells dar. Im Betrieb der Brennkraftmaschine wird das derart trainierte oder optimierte Gauß-Prozessmodell allerdings in umgekehrter Richtung verwendet - es rechnet also quasi rückwärts - um bei Vorgabe einer Eingangsgröße diejenigen Ausgangsgrößen zu ermitteln, mit denen die Eingangsgröße verwirklicht werden kann, um die Brennkraftmaschine dann mit diesen Ausgangsgrößen anzusteuern. Die Ausgangsgrößen sind beispielsweise Stellwerte für Klappen in einem Gaspfad oder eine einzuspritzende Brennstoffmenge; die Eingangsgrößen können beispielsweise ein Drehmomentwunsch, ein bestimmter Ladedruck, ein Brennstoffverbrauch, einzuhaltende Emissionswerte oder dergleichen sein, somit allgemein durch geeignete Einstellung der Ausgangsgrößen zu erzielende oder einzuhaltende Größen.

Insbesondere wird das Gauß-Prozessmodell optimiert, indem die Stützstellen-Eingangsgrößen ***y**_{N}* als freie Parameter des Gauß-Prozessmodells in Abhängigkeit des Mess-Datensatzes (***X**_{b},**y**_{b}*) optimiert werden, um optimierte Stützstellen-Eingangsgrößen ***y***_{N}* zu finden: ${y}_{N}^{∗} = {argmin}_{{y}_{N}} {\sum }_{i = 1}^{o} \left({y}_{b , i}-k\left({X}_{bi}, {X}_{N}\right){K}^{- 1}{y}_{N}\right) .$

Mit den optimierten Stützstellen-Eingangsgrößen ***y***_{N}* können dann beliebige Eingangsgrößen *y*(***x***) in Abhängigkeit beliebiger Ausgangsgrößenvektoren $x ϵ {ℝ}^{D}$ in dem Vektorraum ${ℝ}^{D}$ berechnet werden gemäß: $y \left(x\right) = k \left(x, {X}_{N}\right) {K}^{- 1} {y}_{N}^{∗} .$

Mit der Abkürzung $α : = {K}^{- 1} {y}_{N}^{∗} ∈ {ℝ}^{{n}^{D}}$ und der Kovarianzfunktion gemäß Gleichung (2) ergibt sich dann: $y \left(x\right) = {\sum }_{j = 1}^{{n}^{D}} \left({\prod }_{i = 1}^{D} max \left(0, {\left(1-\frac{{\left‖{x}_{i}-{X}_{Nj , i}\right‖}_{2}^{2}}{2 {l}_{N}^{2} p}\right)}^{p}\right) {α}_{j}\right) .$

Unter Herausziehen des Terms für die erste Dimension *i* = 1 aus dem Produkt-Term ergibt sich: $y \left(x\right) = {\sum }_{j = 1}^{{n}^{D}} \left({\prod }_{i = 2}^{D} max\left(0, {\left(1-\frac{{\left‖{x}_{i}-{X}_{Nj , i}\right‖}_{2}^{2}}{2 {l}_{N}^{2} p}\right)}^{p}\right)max\left(0, {\left(1-\frac{{\left‖{x}_{1}-{X}_{Nj , 1}\right‖}_{2}^{2}}{2 {l}_{N}^{2} p}\right)}^{p}\right){α}_{j}\right) ;$ sowie mit *j* := *nm + l*: $y \left(x\right) = {\sum }_{m = 0}^{{n}^{D - 1} - 1} {\sum }_{l = 1}^{n} \left({\prod }_{i = 2}^{D} max \left(0, {\left(1-\frac{{\left‖{x}_{i}-{X}_{N nm + l , i}\right‖}_{2}^{2}}{2 {l}_{N}^{2} p}\right)}^{p}\right)max\left(0, {\left(1-\frac{{\left‖{x}_{1}-{X}_{N nm + l , 1}\right‖}_{2}^{2}}{2 {l}_{N}^{2} p}\right)}^{p}\right){α}_{nm + l}\right) .$

Nun nutzt man geschickt aus, dass sich - aufgrund der Konstruktion des regelmäßigen Gitters in der ebenso regelmäßigen Stützstellenmatrix ***X**_{N}* - ab der zweiten Dimension in der Stützstellenmatrix ***X**_{N}* Blöcke mit der Länge *n* ergeben, die jeweils für alle *l* identische Einträge aufweisen, sodass man die zugehörigen Produktterme als Konstanten *cₘ* ausklammern kann: ${c}_{m} : = {\prod }_{i = 2}^{D} max \left(0, {\left(1-\frac{{\left‖{x}_{i}-{X}_{N nm + l , i}\right‖}_{2}^{2}}{2 {l}_{N}^{2} p}\right)}^{p}\right) ,$ sodass sich hiermit ergibt: $y \left(x\right) = {\sum }_{m = 0}^{{n}^{D - 1} - 1} \left({c}_{m}{\sum }_{l = 1}^{n} \left(max\left(0, {\left(1-\frac{{\left‖{x}_{i}-{X}_{N nm + l , 1}\right‖}_{2}^{2}}{2 {l}_{N}^{2} p}\right)}^{p}\right){α}_{nm + l}\right)\right) .$

Die blockweise konstante Stützstellenmatrix ***X**_{N}* lautet beispielsweise für ein in jeder Dimension auf ein Intervall [0,1] normiertes Gitter mit 3 äquidistanten Stützstellen pro Dimension in einem zweidimensionalen Vektorraum: ${X}_{N} = \left(\begin{matrix}0 & 0 \\ 0 , 5 & 0 \\ 1 & 0 \\ 0 & 0 , 5 \\ 0 , 5 & 0 , 5 \\ 1 & 0 , 5 \\ 0 & 1 \\ 0 , 5 & 1 \\ 1 & 1\end{matrix}\right) = \left(\begin{matrix}{X}_{N 1 , 1} & {X}_{N 1 , 2} \\ {X}_{N 2 , 1} & {X}_{N 2 , 2} \\ {X}_{N 3 , 1} & {X}_{N 3 , 2} \\ {X}_{N 4 , 1} & {X}_{N 4 , 2} \\ {X}_{N 5 , 1} & {X}_{N 5 , 2} \\ {X}_{N 6 , 1} & {X}_{N 6 , 2} \\ {X}_{N 7 , 1} & {X}_{N 7 , 2} \\ {X}_{N 8 , 1} & {X}_{N 8 , 2} \\ {X}_{N 9 , 1} & {X}_{N 9 , 2}\end{matrix}\right) .$

Entsprechend hat der Vektor ***x*** die folgende Form: $x = \left(\begin{matrix}{x}_{1} \\ {x}_{2}\end{matrix}\right) .$

Die Aufgabe wird in einem zweiten Aspekt insbesondere auch gelöst, indem ein - auch als zweites Betriebsverfahren bezeichnetes - Verfahren zum Betreiben einer Brennkraftmaschine geschaffen wird, wobei
- die Brennkraftmaschine mit einem Brennkraftmaschinenmodell betrieben wird, wobei
- das Brennkraftmaschinenmodell als Gauß-Prozess erstellt ist, indem
   ∘ als ein Ausgangsgrößenvektor des Gauß-Prozesses ein Vektor verwendet wird, der Element eines Vektorraums mit *D* > 1 Dimensionen ist, wobei
   ∘ in dem Gauß-Prozess eine Kovarianzfunktion verwendet wird, die als Produkt einer komponentenweise berechneten Basis-Kovarianzfunktion über - insbesondere alle - Komponenten des Ausgangsgrößenvektors dargestellt werden kann, wobei
   ∘ die Basis-Kovarianzfunktion nicht in ein Produkt aus Funktionen jeweils genau einer Dimension des Vektorraums über die - insbesondere alle - Dimensionen des Vektorraums aufspaltbar ist, wobei
   ∘ der Gauß-Prozess anhand eines Mess-Datensatzes optimiert wird, wobei
   ∘ das Brennkraftmaschinenmodell erhalten wird.

In Zusammenhang mit dem zweiten Betriebsverfahren ergeben sich insbesondere diejenigen Vorteile, die zuvor bereits in Zusammenhang mit dem ersten Betriebsverfahren erläutert wurden.

Gemäß einer Weiterbildung der Erfindung ist vorgesehen, dass Nebenbedingungen für Gradienten in den Dimensionen des Vektorraums bei der Optimierung des Gauß-Prozesses anhand des Mess-Datensatzes berücksichtigt werden. Indem die Kovarianzfunktion als Produkt der komponentenweise berechneten Basis-Kovarianzfunktion über die Komponenten des Ausgangsgrößenvektors dargestellt werden kann, bedarf es für die Nebenbedingungen an die Gradienten lediglich eines vergleichsweise groben Gitters mit Gitterpunkten, die nur in den Stützstellen selbst und optional entlang gedachter Verbindungslinien in den einzelnen Dimensionen zwischen den Stützstellen des Brennkraftmaschinenmodells angeordnet werden müssen, nicht jedoch zusätzlich auch zwischen diesen Verbindungslinien.

Die Aufgabe wird in einem dritten Aspekt insbesondere auch gelöst, indem ein Computerprogramm geschaffen wird, das Befehle aufweist, die bei der Ausführung des Computerprogramms auf einer Rechenvorrichtung, insbesondere auf einer Steuervorrichtung für eine Brennkraftmaschine, die Rechenvorrichtung veranlassen, ein erfindungsgemäßes erstes oder zweites Betriebsverfahren oder ein erstes oder zweites Betriebsverfahren nach einer oder mehreren der zuvor beschriebenen Ausführungsformen durchzuführen. In Zusammenhang mit dem Computerprogramm ergeben sich insbesondere diejenigen Vorteile, die zuvor bereits in Zusammenhang mit dem ersten Betriebsverfahren oder dem zweiten Betriebsverfahren erläutert wurden.

Die Aufgabe wird in einem vierten Aspekt insbesondere auch gelöst, indem ein computerlesbares Speichermedium geschaffen wird, auf dem ein erfindungsgemäßes Computerprogramm oder ein Computerprogramm nach einer oder mehreren der zuvor beschriebenen Ausführungsformen gespeichert ist. In Zusammenhang mit dem computerlesbaren Speichermedium ergeben sich insbesondere diejenigen Vorteile, die zuvor bereits in Zusammenhang mit dem ersten Betriebsverfahren, dem zweiten Betriebsverfahren oder dem Computerprogramm erläutert wurden.

Die Aufgabe wird in einem fünften Aspekt insbesondere auch gelöst, indem eine Steuervorrichtung für eine Brennkraftmaschine geschaffen wird, wobei die Steuervorrichtung eingerichtet ist zur Durchführung eines erfindungsgemäßen ersten oder zweiten Betriebsverfahrens oder eines ersten oder zweiten Betriebsverfahrens nach einer oder mehreren der zuvor beschriebenen Ausführungsformen. In Zusammenhang mit der Steuervorrichtung ergeben sich insbesondere diejenigen Vorteile, die zuvor bereits in Zusammenhang mit dem ersten Betriebsverfahren, dem zweiten Betriebsverfahren, dem Computerprogramm oder dem computerlesbaren Speichermedium erläutert wurden.

Die Aufgabe wird in einem sechsten Aspekt insbesondere auch gelöst, indem eine Brennkraftmaschine mit einer erfindungsgemäßen Steuervorrichtung oder einer Steuervorrichtung nach einer oder mehreren der zuvor beschriebenen Ausführungsformen geschaffen wird. In Zusammenhang mit der Brennkraftmaschine ergeben sich insbesondere diejenigen Vorteile, die zuvor bereits in Zusammenhang mit dem ersten Betriebsverfahren, dem zweiten Betriebsverfahren, dem Computerprogramm, dem computerlesbaren Speichermedium oder der Steuervorrichtung erläutert wurden.

Die Erfindung wird an einem siebten Aspekt insbesondere auch gelöst, indem ein - auch als Auslegungsverfahren bezeichnetes - Verfahren zum Auslegen einer Brennkraftmaschine geschaffen wird, wobei
- ein Brennkraftmaschinenmodell als Gauß-Prozess erstellt wird, indem
- als ein Ausgangsgrößenvektor des Gauß-Prozesses ein Vektor verwendet wird, der Element eines Vektorraums mit *D* > 1 Dimensionen ist, wobei
- in dem Gauß-Prozess eine Kovarianzfunktion verwendet wird, die als Produkt einer komponentenweise berechneten Basis-Kovarianzfunktion über - insbesondere alle - Komponenten des Ausgangsgrößenvektors dargestellt werden kann, wobei
- die Basis-Kovarianzfunktion nicht in ein Produkt aus Funktionen jeweils genau einer Dimension des Vektorraums über die - insbesondere alle - Dimensionen des Vektorraums aufspaltbar ist, wobei
- der Gauß-Prozess anhand eines Mess-Datensatzes optimiert wird, wobei
- das Brennkraftmaschinenmodell erhalten wird, und wobei
- die Brennkraftmaschine eingerichtet wird, um mit dem Brennkraftmaschinenmodell betrieben zu werden.

In Zusammenhang mit dem Auslegungsverfahren ergeben sich insbesondere diejenigen Vorteile, die zuvor bereits in Zusammenhang mit dem ersten Betriebsverfahren, dem zweiten Betriebsverfahren, dem Computerprogramm, dem computerlesbaren Speichermedium, der Steuervorrichtung oder der Brennkraftmaschine erläutert wurden. Vorteilhaft kann das Brennkraftmaschinenmodell sehr effizient und mit geringer Rechenleistung, insbesondere auf einem Standard-PC, erstellt werden.

Gemäß einer Weiterbildung der Erfindung ist vorgesehen, dass Nebenbedingungen für Gradienten in den Dimensionen des Vektorraums bei der Optimierung des Gauß-Prozesses anhand des Mess-Datensatzes berücksichtigt werden. Vorteilhaft kann zur Berücksichtigung der Nebenbedingungen an die Gradienten ein vergleichsweise grobes Gitter angewendet werden, das nur Gitterpunkte aufweist, die in den Stützstellen selbst und optional entlang gedachter Verbindungslinien in den einzelnen Dimensionen zwischen den Stützstellen des Brennkraftmaschinenmodells angeordnet sind, nicht jedoch zusätzlich auch zwischen diesen Verbindungslinien. Hierdurch ist das Auslegungsverfahren sehr effizient und kann auch auf einem Standard-PC durchgeführt werden.

Die Erfindung wird anhand der Zeichnung näher erläutert. Dabei zeigen:
- Figur 1: eine schematische Darstellung eines Auslegungsverfahrens gemäß dem Stand der Technik;
- Figur 2: eine erste schematische Darstellung eines Ausführungsbeispiels eines Auslegungsverfahrens, und
- Figur 3: eine zweite schematische Darstellung des Auslegungsverfahrens gemäß Fig. 2.

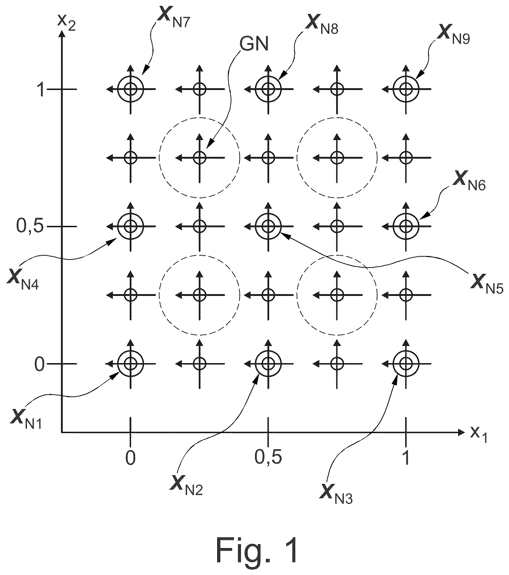

**Fig. 1** zeigt eine schematische Darstellung eines Auslegungsverfahrens gemäß dem Stand der Technik.

In Fig. 1 ist beispielhaft ein zweidimensionaler Vektorraum ${ℝ}^{2}$ (*D* = 2) dargestellt, der aufgespannt wird durch eine erste Dimension *x₁* und eine zweite Dimension *x₂.* Der Wertebereich von Ausgangsgrößen in den beiden Dimensionen ist jeweils normiert auf das Intervall [0,1]. Den Dimensionen sind jeweils drei äquidistante Stützstellen (n = 3) bei den Werten 0, 0,5 und 1 vorgesehen.

Auf diese Weise ergibt sich eine blockweise konstante Stützstellenmatrix ***X**_{N}* mit den neun Vektorraum-Gittervektoren ***X***_{*N*1} ... ***X***_{*N*9}: ${X}_{N} = \left(\begin{matrix}{X}_{N 1 , 1} & {X}_{N 1 , 2} \\ {X}_{N 2 , 1} & {X}_{N 2 , 2} \\ {X}_{N 3 , 1} & {X}_{N 3 , 2} \\ {X}_{N 4 , 1} & {X}_{N 4 , 2} \\ {X}_{N 5 , 1} & {X}_{N 5 , 2} \\ {X}_{N 6 , 1} & {X}_{N 6 , 2} \\ {X}_{N 7 , 1} & {X}_{N 7 , 2} \\ {X}_{N 8 , 1} & {X}_{N 8 , 2} \\ {X}_{N 9 , 1} & {X}_{N 9 , 2}\end{matrix}\right) = \left(\begin{matrix}0 & 0 \\ 0 , 5 & 0 \\ 1 & 0 \\ 0 & 0 , 5 \\ 0 , 5 & 0 , 5 \\ 1 & 0 , 5 \\ 0 & 1 \\ 0 , 5 & 1 \\ 1 & 1\end{matrix}\right) .$

Jeder Stützstelle ist somit ein Vektorraum-Gittervektor ***X**_{Nj}* mit zwei Komponenten *X_{Nj,i}* zugeordnet: ${X}_{Nj} = {\left(\begin{matrix}{X}_{Nj , 1} \\ {X}_{Nj , 2}\end{matrix}\right)}^{T} .$

Entsprechend hat allgemein ein Vektor ***x*** in dem Vektorraum die Form der Gleichung (13).

Um Monotonieeigenschaften beim Erstellen eines herkömmlichen Brennkraftmaschinenmodells auf dem Vektorraum korrekt wiederzugeben, bedarf es der Erstellung eines über dem gesamten Vektorraum aufgespannten, feineren Gitters mit Nebenbedingungen für die Gradienten des Modells, wobei das Gitter in dem Sinn engmaschig ist, dass es in allen Dimensionen mehr Gitterpunkte *GN* aufweist, als das Brennkraftmaschinenmodell in der jeweiligen Dimension Stützstellen hat. Dabei bedarf es insbesondere auch solcher Gitterpunkte *GN,* die zwischen gedachten, geraden Verbindungslinien der Stützstellen in den einzelnen Dimensionen liegen - hier markiert mit jeweils einem gestrichelten Kreis um diese Gitterpunkte *GN.* Dies bringt einen erheblichen Rechenaufwand mit sich, der insbesondere mittels Standard-PCs nicht zu bewältigen ist.

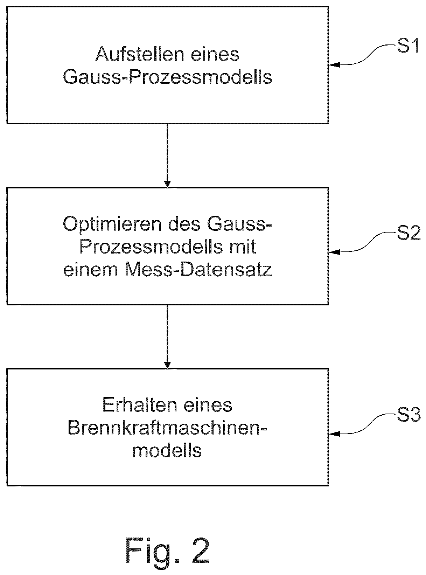

**Fig. 2** zeigt eine erste schematische Darstellung eines Ausführungsbeispiels eines Auslegungsverfahrens.

Gleiche und funktionsgleiche Elemente sind in allen Figuren mit gleichen Bezugszeichen versehen, sodass insofern jeweils auf die vorangegangene Beschreibung verwiesen wird. Außerdem sind in einer Figur mehrfach auftretende Elemente der besseren Übersichtlichkeit wegen jeweils nur einmal mit einem entsprechenden Bezugszeichen gekennzeichnet.

In dem Auslegungsverfahren wird
- ein Brennkraftmaschinenmodell als Gauß-Prozess erstellt, indem
- als ein Ausgangsgrößenvektor des Gauß-Prozesses ein Vektor verwendet wird, der Element eines Vektorraums mit *D* > 1 Dimensionen ist, wobei
- in dem Gauß-Prozess eine Kovarianzfunktion verwendet wird, die als Produkt einer komponentenweise berechneten Basis-Kovarianzfunktion über - insbesondere alle - Komponenten des Ausgangsgrößenvektors dargestellt werden kann, wobei
- die Basis-Kovarianzfunktion nicht in ein Produkt aus Funktionen jeweils genau einer Dimension des Vektorraums über die - insbesondere alle - Dimensionen des Vektorraums aufspaltbar ist, wobei
- der Gauß-Prozess anhand eines Mess-Datensatzes optimiert wird, wobei
- das Brennkraftmaschinenmodell erhalten wird, und wobei
- die Brennkraftmaschine eingerichtet wird, um mit dem Brennkraftmaschinenmodell betrieben zu werden.

Als Basis-Kovarianzfunktion wird bevorzugt die Funktion gemäß Gleichung (1) verwendet. Als Kovarianzfunktion wird entsprechend bevorzugt die Kovarianz-Funktion gemäß Gleichung (2) verwendet.

Insbesondere wird in einem ersten Schritt S1 ein Gauß-Prozessmodell für den Gauß-Prozess aufgestellt. In einem zweiten Schritt S2 wird das Gauß-Prozessmodell anhand eines Mess-Datensatzes - vorzugsweise gemäß Gleichung (4) - optimiert. In einem dritten Schritt S3 wird das Brennkraftmaschinenmodell erhalten.

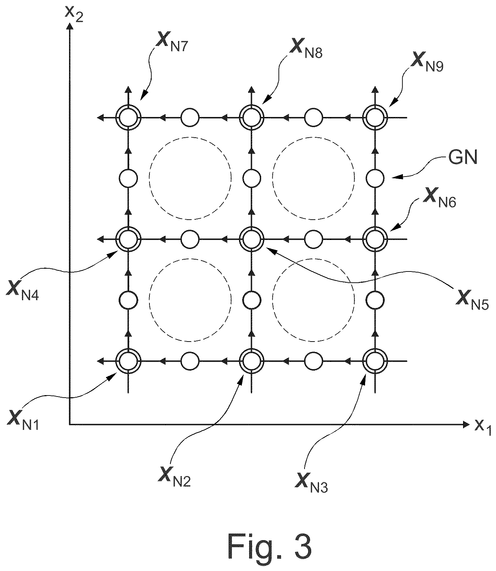

**Fig. 3** zeigt eine zweite schematische Darstellung des Auslegungsverfahrens gemäß Fig. 2.

In Fig. 3 ist schematisch dargestellt, dass bei der Verwendung des gemäß dem Auslegungsverfahren nach Fig. 2 erhaltenen Brennkraftmaschinenmodells vorteilhaft weniger Gitterpunkte für das - nun gröbere - Gitter mit Nebenbedingungen für die Gradienten verwendet werden müssen, um die Monotonieeigenschaften zu gewährleisten. Insbesondere bedarf es nicht mehr solcher Gitterpunkte *GN,* die zwischen den gedachten, geraden Verbindungslinien der Stützstellen in den einzelnen Dimensionen liegen, was durch die Lücken in dem Gitter im Vergleich zu der Darstellung in Fig. 1 deutlich wird - insbesondere sind in den analog zu Fig. 1 platzierten gestrichelten Kreisen hier keine Gitterpunkt *GN* angeordnet. Somit ist der Rechenaufwand erheblich reduziert und kann auch auf einem Standard-PC durchgeführt werden.

Vorzugsweise wird das Brennkraftmaschinenmodell verwendet, um eine Brennkraftmaschine zu betreiben, insbesondere zu steuern oder zu regeln. Hierzu wird dem Brennkraftmaschinenmodell mindestens eine Eingangsgröße zugeführt, der Ausgangsgrößenvektor wird anhand des Brennkraftmaschinenmodells berechnet, und die Brennkraftmaschine wird mit dem Ausgangsgrößenvektor betrieben.

## Patentansprüche

1. Verfahren zum Betreiben einer Brennkraftmaschine, wobei
- einem Brennkraftmaschinenmodell mindestens eine Eingangsgröße zugeführt wird, wobei
- als das Brennkraftmaschinenmodell ein Gauß-Prozess verwendet wird, wobei
- als ein Ausgangsgrößenvektor ein Vektor verwendet wird, der Element eines Vektorraums mit *D* > 1 Dimensionen ist, wobei
- eine Kovarianzfunktion verwendet wird, die als Produkt einer komponentenweise berechneten Basis-Kovarianzfunktion über Komponenten des Ausgangsgrößenvektors dargestellt werden kann, wobei
- die Basis-Kovarianzfunktion nicht in ein Produkt aus Funktionen jeweils genau einer Dimension des Vektorraums über die Dimensionen des Vektorraums aufspaltbar ist, wobei
- anhand des Brennkraftmaschinenmodells der Ausgangsgrößenvektor berechnet wird, und wobei
- die Brennkraftmaschine mit dem Ausgangsgrößenvektor betrieben wird.

2. Verfahren nach Anspruch 1, wobei als die Basis-Kovarianzfunktion eine abgeschnittene Potenzfunktion verwendet wird.

3. Verfahren nach Anspruch 2, wobei die abgeschnittene Potenzfunktion von einem Abstand der jeweiligen Komponente des Ausgangsgrößenvektors von einer zugeordneten Komponente eines vorbestimmten Vektorraum-Gittervektors abhängen.

4. Verfahren nach Anspruch 3, wobei als die Basis-Kovarianzfunktion die Funktion $k ′ \left({x}_{i}, {X}_{j , i}\right) = max \left(0, {\left(1-\frac{{\left‖{x}_{i}-{X}_{j , i}\right‖}_{2}^{2}}{2 {l}_{N}^{2} p}\right)}^{p}\right)$ mit dem Ausgangsgrößenvektor ***x,*** dem Vektorraum-Gittervektor ***X**ⱼ,* einer Längenskalenparamter *l_{N}* und einem Parameter *p* verwendet wird.

5. Verfahren nach einem der vorhergehenden Ansprüche, wobei das Verfahren während des Betriebs der Brennkraftmaschine fortlaufend durchgeführt wird.

6. Verfahren zum Betreiben einer Brennkraftmaschine, wobei
- die Brennkraftmaschine mit einem Brennkraftmaschinenmodell betrieben wird, wobei
- das Brennkraftmaschinenmodell als Gauß-Prozess erstellt ist, indem
∘ als ein Ausgangsgrößenvektor des Gauß-Prozesses ein Vektor verwendet wird, der Element eines Vektorraums mit *D* > 1 Dimensionen ist, wobei
∘ in dem Gauß-Prozess eine Kovarianzfunktion verwendet wird, die als Produkt einer komponentenweise berechneten Basis-Kovarianzfunktion über Komponenten des Ausgangsgrößenvektors dargestellt werden kann, wobei
∘ die Basis-Kovarianzfunktion nicht in ein Produkt aus Funktionen jeweils genau einer Dimension des Vektorraums über die Dimensionen des Vektorraums aufspaltbar ist, wobei
∘ der Gauß-Prozess anhand eines Mess-Datensatzes optimiert wird, wobei
∘ das Brennkraftmaschinenmodell erhalten wird.

7. Verfahren nach Anspruch 6, wobei Nebenbedingungen für Gradienten in den Dimensionen des Vektorraums bei der Optimierung des Gauß-Prozesses anhand des Mess-Datensatzes berücksichtigt werden.

8. Computerprogramm, aufweisend Befehle, die bei der Ausführung des Computerprogramms auf einer Rechenvorrichtung, insbesondere auf einer Steuervorrichtung für eine Brennkraftmaschine, die Rechenvorrichtung veranlassen, ein Verfahren nach einem der Ansprüche 1 bis 7 durchzuführen.

9. Computerlesbares Speichermedium, auf dem das Computerprogramm nach Anspruch 8 gespeichert ist.

10. Steuervorrichtung für eine Brennkraftmaschine, eingerichtet zur Durchführung eines Verfahrens eine Ansprüche 1 bis 7.

11. Brennkraftmaschine mit einer Steuervorrichtung nach Anspruch 10.

12. Verfahren zum Auslegen einer Brennkraftmaschine, wobei
- ein Brennkraftmaschinenmodell als Gauß-Prozess erstellt wird, indem
- als ein Ausgangsgrößenvektor des Gauß-Prozesses ein Vektor verwendet wird, der Element eines Vektorraums mit *D* > 1 Dimensionen ist, wobei
- in dem Gauß-Prozess eine Kovarianzfunktion verwendet wird, die als Produkt einer komponentenweise berechneten Basis-Kovarianzfunktion über Komponenten des Ausgangsgrößenvektors dargestellt werden kann, wobei
- die Basis-Kovarianzfunktion nicht in ein Produkt aus Funktionen jeweils genau einer Dimension des Vektorraums über die Dimensionen des Vektorraums aufspaltbar ist, wobei
- der Gauß-Prozess anhand eines Mess-Datensatzes optimiert wird, wobei
- das Brennkraftmaschinenmodell erhalten wird, und wobei
- die Brennkraftmaschine eingerichtet wird, um mit dem Brennkraftmaschinenmodell betrieben zu werden.

13. Verfahren nach Anspruch 12, wobei Nebenbedingungen für Gradienten in den Dimensionen des Vektorraums bei der Optimierung des Gauß-Prozesses anhand des Mess-Datensatzes berücksichtigt werden.
